Europäisches Patentamt

European Patent Office

Office européen des brevets

(19)

(11) Publication number: **0 048 603**
**B1**

(12) **EUROPEAN PATENT SPECIFICATION**

(45) Date of publication of patent specification: **12.12.84**

(21) Application number: **81304294.2**

(22) Date of filing: **18.09.81**

(51) Int. Cl.³: **C 02 F 9/00,** C 02 F 1/52,
C 02 F 1/72

(54) **Mixing and reaction chamber for liquid decontamination.**

(30) Priority: **22.09.80 US 189600**

(43) Date of publication of application:
**31.03.82 Bulletin 82/13**

(45) Publication of the grant of the patent:
**12.12.84 Bulletin 84/50**

(84) Designated Contracting States:
**BE DE FR GB IT LU NL SE**

(56) References cited:
**EP-A-0 007 325**
**GB-A- 22 957**
**GB-A-1 470 242**
**GB-A-1 552 172**

(73) Proprietor: **PRECIPITATOR CORPORATION**
**12040 East Florence Avenue**
**Santa Fe Springs California 90670 (US)**

(72) Inventor: **Lindman, William Edward**
**10189 Oriole Avenue**
**Fountain Valley California 92708 (US)**
Inventor: **Alexander, John A.**
**Box 288**
**Cayucos California 93430 (US)**

(74) Representative: **Thomson, Paul Anthony et al**
**Potts, Kerr & Co. 15, Hamilton Square**
**Birkenhead Merseyside L41 6BR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a mixing and reaction chamber particularly suitable for effecting selective, stepwise treatment of a flowable, contaminated body of liquid therein.

In our European Application No. 78300083.9 (EP—B—0 007 325), there is disclosed a process and apparatus for removing from a polar liquid such as water, a dissolved or suspended contaminant, thus obtaining (a) essentially pure liquid (e.g. water) and (b) sterile sludge. In some instances, desired ingredients, such as precious metals, were recoverable from the sludge by fractionation. Typical feed stocks were municipal sewage and/or industrial or agriculture waste water. The illustrated apparatus consisted of sequentially flow-connected units comprising (a) an aerating and macerating collection tank (surge tank), (b) and acidifying chamber into which $SO_2$ is metered and mixed, (c) a submerged-iron bed-containing tank which, in response to flow through of the acidic media, furnishes ferric/ferrous ions for oxidative reaction with the flow stream, (d) means for controlled admixture of air and alkaline reagent, e.g. NaOH or $Ca(OH)_2$, into the stream, and (e) flocculation and solids-separation means including pH control. Each segment of the monitored and flow-controlled stream would be retained in each successive unit for the required reaction or treatment time, and thereafter flow to the next unit; thus when all segments of the stream were stepped forward simultaneously the residence time in each unit was essentially the same, namely it was the longest reaction time required in any unit.

However, the treatment pattern exhibited some points of weakness when restricted to use of that apparatus. Thus, if the flow had to be suspended for correction of a local factor at any particular point along the line, the entire flow necessarily stopped. This could result in reestablishment in the subsequent flow of some organisms, often reintroduced from the air, which had earlier been removed from the stream by the initial acid treatment step. The composite procedure which uses successive treatment by strong acid and then by strong alkali ensures elimination of all microorganisms; those not eliminated by one reagent are eliminated by the other. However, when the two extremes of pH occur at opposite ends of a relatively long intermediate procedure, the problem of re-infection from apparatus which is subsequent to initial acid-treatment units also increases. Other apparatus problems include sediment build-up on the walls and lime encrustations of conduits and valves. These can be combatted by acid treatment if promoted by alkali.

Also, a schedule flow procedure desirably should be adaptable so as to accommodate the differences in feed stocks. For example, proteins denature and float or settle fairly rapidly in acid media and should be promptly removed substantially as formed (rather than carried through to the final alkaline separation). This might require a structural by-pass or alternate flow, if such a permanent pattern were not desired.

Alternatively, colloidal material associated with oil and grease, e.g. refinery waste stream or laundry or car wash effluent, may require variations of procedure such as flow rate, residence time pH etc. directed to the particular contaminant and/or its specific state, such as an emulsion. Also, particular flocculants may show greater adherence to the iron bed or chamber walls of the apparatus which therefore have to be flushed down more often with stronger reagents. In brief, even though successive subunits are assembled in a permanent flow stream or "assembly line", at times it is highly desirable to be able to treat one or the other as an independently adjustable unit while the others are still left to function as parts of the whole.

The basic process detailed in our European Application No. 78300083.9 may be summarized as a stepwise treatment of flowable polar liquid such as water, which liquid contains dissolved and/or suspended contaminants. At least a minimum (0.1% wt.) of total solids contaminant should be capable of accepting a galvanic charge, which minimum quantity may be added if not initially present. All particulate matter present should have a size in the range of from 30 to 225 $\mu$m diameter, free surface energy of from $100 \times 10^{-7}$ to $500 \times 10^{-7}$ joules/cm$^2$ and a density of from 1.05 to 2.0. That is, large solids are initially removed, for example by screening; and the remainder are reduced to this particle size to which a galvanic charge is then imparted by pH control of the liquid medium which is held or flowed in an electrically insulated apparatus. The body of liquid is moved stepwise through successive reaction units and connecting flow channels which are constructed in accordance with specific dimensionless parameters so as to avoid undesired coalescence or precipitation of the moving, charged particles.

The body of liquid is first exposed to a strong acidic oxidizing environment preferably of pH 2.0 to 2.5 produced by admixture therewith of sulfur dioxide, air and free electrons/ions derived from a flow-through bed of pieces of iron. With continued intermixing of air or oxygen, the body of liquid is then made strongly alkaline by addition of lime or sodium hydroxide, preferably at pH 8 to 11. Desirably with electrically grounding the liquid, ferric hydroxide is flocculated and carries away other contaminants with it. The resulting sterile sludge and supernatent liquid, e.g. decontaminated water, can be further processed if desired, by dehydrating and fractionating the former, and filtration plus incorporation of oxygen into the latter.

The present apparatus provides a more effective means of carrying out such basic process by coupling a conical reaction chamber with commercially available handling and control units to form a complete flow apparatus, which may even be automated.

According to the present invention there is provided a mixing and reaction chamber particularly suitable for effecting selective, stepwise, treatment of a flowable contaminated body of liquid therein, said chamber having multiple inlet means with conduit coupling means for flow coupling respectively to acidic and alkaline reagent supply sources and for introduction of said body of liquid into the chamber, characterised in that the chamber has a conical body portion formed of downwardly tapering, internally smooth walls terminating in a lower apical region having selective flow control and dual outlet means for separately withdrawing from the contained body of liquid, a solid particle component and a supernatent liquid component separated therefrom, that the conical body portion has mixing means operative within its contained body of liquid and additionally has means for selective introduction of gaseous reagents including air into the body of liquid for reaction therewith, and that the conical body portion has power driven vibration means attached thereto and adapted for accentuating formation therein and accumulation of solid particles in said apical region following introduction of said acidic or alkaline reagents.

Also in accordance with the invention there is provided an assembly for processing contaminated liquid so as to produce sterile solid material and substantially uncontaminated liquid therefrom, said assembly including storage containers for acidic and alkaline reagent, an iron reaction chamber and process control means, characterized in that the assembly comprises, in flow-connected association, a mixing and reaction chamber according to the invention disposed in functional supply connection with said separate storage containers of acidic reagent and alkaline reagent said iron reaction chamber containing a flow-through iron bed adapted to introduce ferrous/ferric ions into said body of liquid when acidified, the iron reaction chamber being disposed to receive liquid flow from said outlet means and being flow connected to deliver an outflow back to the mixing and reaction chamber where alkaline reagent may be added thereto; and said process control means including pH sensor and remote operated pump and valve means for effecting stepwise operation including addition of an amount of said acidic reagent from its storage container to the contaminated liquid to produce pH of about 2 and for continuous circulation of said liquid jointly through the mixing and reaction chamber and through the iron reaction chamber in response to timer means forming part of said control means, said control means also including means for stopping said last circulation and thereafter adding alkaline reagent from its respective storage container to the acidified body of liquid in the mixing and reaction chamber so as to produce a pH of about 10.

Thus, the invention provides an improved, integrated, multi-unit apparatus for better effecting the above described flow procedure of stepwise liquid decontamination, which apparatus utilizes a hub-like or central multi-reaction vessel, advantageously of upstanding conical configuration and coupled by conduit pump and valve means to "satellite" reaction and supply units which collectively enable effectuation of the successive steps of a complete treatment but now achieved with selective interconnections or flow channels. The multi or selective reaction cone is also self-cleaning by virtue of its alternate use for acidic and alkaline reactions and also by provision of a washdown spray conduit which is connected to an acidic or biocide supply source. The conical reaction unit may be an article of commerce by itself and is provided around its upper cylindrical perimeter with coupling means for flow connection to separate acidic and alkaline supply chambers and for introduction of the liquid feed stock to the interior. The lower, generally apical region had dual outlets, for liquid and sediment, one connected to a dependent sludge separation sub-unit which acts as a settling chamber. The conical walls preferably have no greater than about 27° slant from a generally vertical axis in order to prevent sludge from clinging to them, and externally the upstanding or outslanted walls carry power-driven vibrators which, especially with a greater than 27° cone, may be required to accelerate flocculation and particle, e.g. sludge, separation from the body of liquid therein. The interior of the cone also has a motor driven mixing or stirrer unit disposed therein as well as means for introducing external air and gaseous reactants such as sulfur dioxide into the body of liquid; it also has a closure seal used when such gases are present.

The satellite or associated units of the assembly comprise conduit and in-line mixer connected reagent containers respectively containing gaseous sulfur dioxide, sulfuric acid, sodium hydroxide, lime, e.g. such as slurried lime and a final oxidative treating chemical such as chlorine or ozone. Selectively flow connected to the conical reactor by conduit, pump and valve means are (a) a primary aeration or surge tank with submerged macerator/comminutor means, (b) a flow-through iron containing tank for incorporation of ferric/ferrous ions and free electrons into the acid stream, (c) sludge separation and handling means to the extent required, (d) a terminal product liquid reservoir with associated filter and gaseous oxidation means for finishing treatment as required.

A flow pattern can thus be established with treatment time and sequence particularly adapted to a particular feed stock, and the assembly then be set for continuous operation as controlled by a stepping switch and a unit timer which is responsive to the electronic monitoring elements of each unit.

One way of carrying out the invention is described in detail below with reference to the drawings which illustrate only one specific embodiment, in which:—

Fig. 1 is a minimal flow patternfand semi-schematic apparatus assembly for acid/alkali/iron treatment used for chemically effected solid separation of contaminants dispersed in a polar liquid such as water;

Fig. 2 is an axial section taken through a conduit coupling;

Fig. 3 is an axial section taken through the outlet sludge valve of Fig. 4;

Fig. 4 is a partial side elevational view and vertical section taken through the conical reaction chamber with dependent sludge separator;

Fig. 5 is a top view of the chamber of Fig. 4 with a portion of the closure removed to show the interior; and

Fig. 6 is a bottom plan view of the conical reaction chamber.

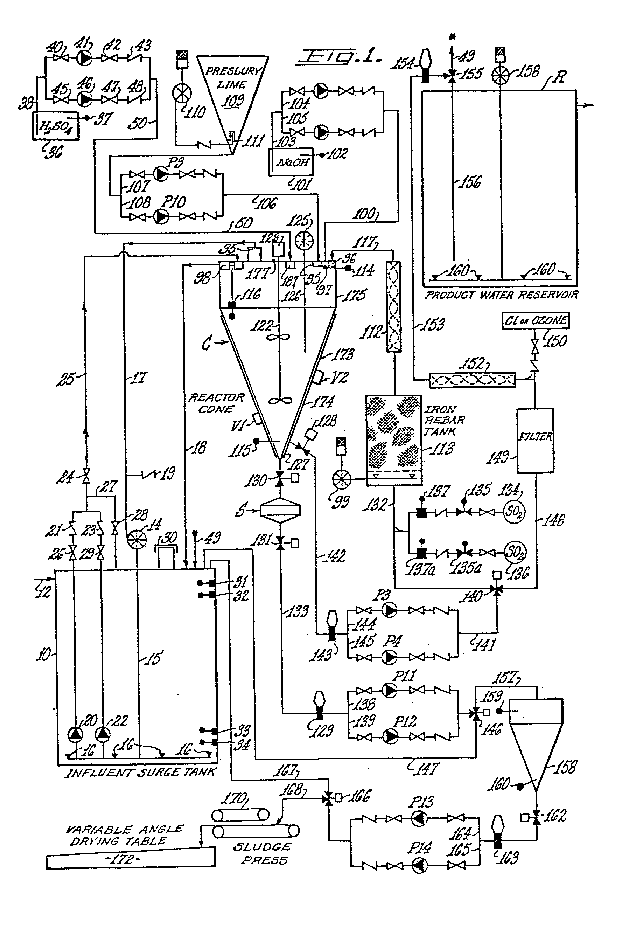

An accumulation and preliminary treatment tank 10 (Fig. 1) is supplied by conduit 12 with the waste water or other contaminant liquid to be treated. External air from blower 14 is introduced into the body of contaminated liquid through a plurality of outlet nozzles 16 supplied by conduit 15, which action also causes turbulence and mixing of the liquid and its particle content. Agitation is also promoted by action of a pair of submerged chopper/grinder, e.g. macerator, pumps 20, 22 which ingest a steady stream of the treatment tank content, reduce solids to a maximum particle size as required and move the resultant mix through ball valves 26, 29, check valves 21, 23 and ball valve 24 to a delivery line 25 which is coupled to the mixing and reaction chamber C.

A return conduit 27 and ball valve 28 allow the pump output to continuously recirculate to the preliminary treatment tank 10 when so desired, or the valves may be set for fractional recirculation as required. The tank 10 is also provided with an odour-adsorbent type gas vent 30 filled with activated carbon and a plurality of liquid level control or monitoring units 31, 32, 33, 34 located at upper and lower levels of tank 10 and electrically connected to a central control which balances in-flow and out-flow by remote controlled pump and valve action of the flow system. A liquid overflow line 18 and gas exhaust line 17 also connect the reaction chamber C to the surge tank 10, the latter through the blower 14 which is equipped with a a vacuum release valve 19. A return line 49 connects the tank 10 to the terminal product tank R.

A sulfuric acid supply tank 36, with liquid level sensor 37 is connected by outflow line 38 leading to alternate paths of control sequence, respectively, ball valve 40, pump 41, ball valve 42 and check valve 43, or ball valve 45, pump 46, ball valve 47 and check valve 48. Both sequences are flow connected to acid supply line 50 which is coupled to the reaction chamber C (Fig. 1). By an alternative flow of $SO_2$, an acid supply can also enter through an in-line or motionless mixer 112 from tanks 134, 136 as hereinafter explained. Paired or alternative control sequences involving pump and valve units are used throughout in order to have an alternative flow available in the event that the first used requires repair.

Continuing the Fig. 1 flow apparatus, an aqueous sodium hydroxide supply container 101, with liquid level sensor 102 is connected by conduit 103 through alternate control sequences 104, 105, similar to the sulfuric acid control sequences, to supply conduit 100 which empties into the reaction chamber C. A lime hopper 109 with eductor unit 111 and air blower 110 supplies lime to the reaction chamber C through control sequences 107, 108 and supply conduit 106. An external air blower 125 through conduit 126 introduces air into the body of liquid within the reaction chamber C. The lime hopper 109 may be supplied with preslurried lime which is a byproduct of the acetylene industry and contains about 40% solids. This is usually pumpable without further addition of liquid. The lime supply conduit 106 is selectively attachable to a coupling unit 95, and the sodium hydroxide supply conduit 100 is detachably coupled to a similar unit 97, both located adjacent the upper edge of the reaction chamber C.

Flow-connected to the reaction chamber C by conduit 117 and in-line mixer 112 is an acidic iron chamber 113 containing a flow-through bed formed by small pieces of metallic iron such as "rebar" (iron rods used in reinforcing concrete), the chamber also being supplied with external air by a blower 99. The bottom inlet line 132 of the iron tank 113 is connected to gaseous sulfur dioxide containers 134, 136 by control sequences which include solenoid valves 135, 135a, and pressure sensors 137, 137a. The conduit 132 arises from a three-way diverter valve 140 which, through conduits 141, 142 receives the supernatant or liquid outflow from the reaction chamber C after passage through outlet valve 128, turbidity sensor 143 and control sequences 144, 145.

This conduit 142, 141 thus can convey initial feed stock or its liquid to the iron tank from the reaction chamber C after preliminary separation of sediment through valve 130 to the sludge separator S. By way of the iron tank 113 and mixer 112 the supernatant flow may thus be re-introduced to the reaction chamber C and after subsequent treatment, including alkylation and flocculation, the new supernatant liquid by way of the same flow line 142, 141, may at the diverter valve 140 be directed through conduit 148 and filter 149 for introduction of gaseous oxidizer from storage container 150, then through in-line mixer 152, conduit 153 and turbidity sensor 154 to three-way valve 155. It may then be returned by conduit 49 to the initial surge tank 10, if required, or run into the product reservoir R by conduit 156. The product reservoir R also has an air blower 158 for bottom level aeration of the contained liquid by way of dependent nozzles 160.

Returning to the outflow from the reaction chamber C, which will be detailed subsequently sludge from the separator unit S passes through a motorized ball valve 131 and conduit 133 to a sludge sensor 129 and through alternate control sequences 138, 139 to a three-way diverter valve 146 connecting to return conduit 147 leading to the surge tank 10 and by alternate conduit 157 is conveyed to a settling cone 158 having liquid level sensors 159, 160. From the cone apex, flowable sludge passes through a motorized ball valve 162 and a sludge sensor 163 to alternate control sequences 164, 165 and then to a three-way diverter valve 166 connecting to return conduit 167 leading to the surge tank 10 and by alternate conduit 168 to an endless belt type, sludge press 170 and a variable angle drying table 172, which latter may be essentially a flat cement slab with elevating jacks, not shown, located at one end for optional use.

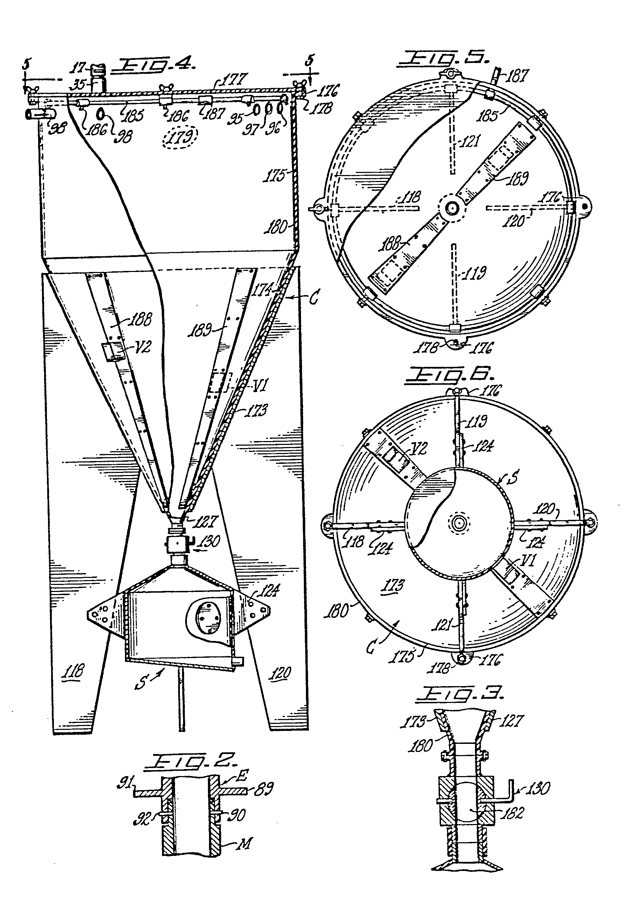

As detailed in Fig. 4, the reaction chamber C is located in an upright manner by four support legs 118 119, 120, 121. The vessel is formed by a metallic shell 173 having a conical body segment 174 and an upper, generally cylindrical segment 175 provided with a top lip or out-turned flange 176 to which a flat top or closure 177 may be secured as by clamps or bolts 178. Such cover is used to form a gas chamber 179 overlying a body of liquid held within the cone and thereabove. Gas such as oxygen or sulfur dioxide, after injection escaping unreacted from the contained liquid, may be moved from this confined space 179 through control valve 35 and conduit 17 for submerged entry into the surge tank 10 by means of blower 14.

The lower apical region 127 of the chamber C is connected through a ball type drainage valve 130 (Fig. 3) to a dependent sludge receptacle or container S. The latter is fastened to the support legs by corresponding bracket plates 124. Within the metallic shell 173 is an acid- and alkali-resistant liner 180 which may be formed of reinforced fiberglass and is adhered to the metal body wall. The internal, liquid-contacting surface of the liner should have a smooth, low friction face so as to minimize sediment or precipitate clinging thereto instead of sliding down the sloping face to the bottom outlet and into the sludge receptacle S through a normally open aperture 182 of the connecting ball valve 130. Such liner can also be formed of epoxy resin, sprayed onto the metal; or by 0,076 cm polyvinylchloride molded as a rigid form.

The motor-driven mixer 122, 123 and the air blower 125 may each be separately suspended into the liquid volume of the chamber C when the top of the vessel is left uncovered. Alternately the motor 123 may be mounted on the closure 177 with the drive shaft 122 extending therethrough; similarly the blower 125 may be mounted atop the closure 177 with the air delivery conduit 126 extending therethrough into the body of contained liquid.

Secured about the inner perimeter of the cylindrical segment 175 of the conical chamber C, adjacent the upper edge or mouth thereof, is an encircling conduit ring 185 having a plurality of spray outlet apertures or nozzles 186 directed to flush or wash down the inner wall surface of the reactor by the fan-spread pattern of liquid emitted therefrom. The ring 185 is flow connected to the sulfuric acid supply conduit 50, or to a biocide supply, through the valve coupling 187. The cylindrical segment 175 of the chamber C also has a coupling attachment 97 for the sodium hydroxide supply conduit 100 plus the coupling attachment 98 for the overflow line 18 and 96 for line 117.

Located on opposite sides of the conical body portion 174 of the chamber C, spotted along a helical path, are a pair of compressed-air powered vibrators V1 and V2, which are inwardly fastened to a respective anchorage plate 188, 189 and project radially outwardly through the metallic body 173; that is, each longitudinal strut or anchorage plate sandwiches a strip of the liner 180 between it and the reinforcing shell 173. Simultaneous operation of the vibrators, at different frequencies, is found to eliminate potential "dead spots" of sediment/particle attachment along the down-sloped surface wall. Also, during acid and alkaline precipitation or flocculation, the vibrator action accelerates the reaction by promoting intermixing. As the inclination of the conic walls increases beyond about 27° from the vertical axis, the need for such vibrators is correspondingly increased in order to overcome th flow resistance offered by the walls, which resistance is of course increased by roughness of the walls. Such initial roughness of the metal cone is reduced, as noted, by coating its inner surface with synthetic resin. Alternately the so-called "Zorb" tanks may be used, made by Polycal Plastics Corp., of high density polyethylene.

Thus the liner 180 may either be separate or preformed (preexisting) or be formed in situ on the interior of the supporting cone or shell 173.

A typical quick coupling construction for attaching flexible conduits to the reaction chamber C is shown in Fig. 2. The conduit end E has a radially opposing pair of grab handles 89, 91 and is formed with a pair of L-shaped bayonet slots which thrust-engage and upon partial rotation seat a corresponding pair of coupling pins 90, 92 carried by the coupling mouth M which is fixed on the chamber C or the closure 177.

Operation of the apparatus is as follows:—

Raw sewage was run into the surge tank 10 as obtained from Los Coyotes Water Reclamation Center. It has a pH of 6,98, turbidity 175 NTU, iron content 4.0 mg/l, TDS 1125 mg/l, coliform count 79 million, BOD 112 mg/l, suspended solids 167 mg/l.

Without aeration, it was moved to thereaction chamber C through conduit 25 by action of a Vaughn chopper grinder pump 20 or 22. This pump had a capacity of 11,4 l/min and it took about 25 min. to transfer 284 l of this feed stock to the 303 l reaction chamber C. During this period, the liquid outlet valve 128, as well as the sludge valve 130, 131 remained closed and the chopper pump(s) 20, 22 was shut off by the liquid level control 114. However, the valves 128 and 140 could have remained open and the incoming feed been allowed to circulate through the iron tank 113 and mixer 112 and returned to the chamber C through conduit 117, either with or without addition of sulfur dioxide or sulfuric acid—i.e. to the extent that it was acidic, the flow would accumulate ions and electrons from the iron tank.

The acidification cycle then commences with activation of the pump P3 or P4 which moves the feed stock from the bottom of the chamber C through outlet valve 128 and conduits 142, 141, 132 into the iron tank 113, then through motionless mixer 112 and return conduit 117, via coupling attachment 96 to the chamber C where it continues to be agitated by the slow moving mixer 122.

With activation of the pump P3 or P4, a central pH control meter which is connected to the pH sensor 116 of the chamber C activates the solenoid valve 135 or 135a which injects sulfur dioxide gas from pressure container 134 or 136 through the pressure sensor 137 or 137a. Alternate to acidifying with sulfur dioxide, sulfuric acid from container 36 can be added to the chamber C by action of the pump 41 or 46, and the body of liquid from C circulated through the iron tank 113 as just described. Some contaminants are found to be more responsive to treatment with one reagent than the other; trial runs may initially be made.

Typically about 15 minutes is allowed for acidic reaction with the feed stock itself, plus an equal time for reaction of the mixture with the iron tank components including oxygen or air. Accordingly, if the feed stock is circulated through the iron tank as soon as sulfuric acid or sulfur dioxide commences to be added to it, such circulation may continue for about half an hour. Thus, with a 284 l capacity chamber C and recirculation pump operation of 52,4 l/min

the liquid flow completes an iron and acidic injection passage every 5 1/2 minutes.

The pumps P3, P4 stop at the end of the acidic cycle and the central stepping switch controller (such as made by Amerace Corp., Control Products Division, "Agastat" TM, or the timing control made by Eagle Signal Division of Gulf & Western Mfg Co.), starts the alkylation cycle which again is governed by the pH meter in response to its variously distributed pH probes. (Such units are made, for example, by Great Lakes Instruments, Inc.). Lime slurry from hopper 109 is added on a pulsed basis to the chamber C through conduit 106 by action of a low volume progressing cavity pump P9 or P10 which is activated for 10 seconds of every minute. When the pH is raised to about 10, the pump is deactivated and mixing by the slow mixer 122, 123 is continued for a total of about 20 minutes. In some instances, sodium hydroxide is used in conjunction with the lime.

After mixing is stopped, valve 130 is opened, or may have remained open during alkylation, and settling is allowed for 3 to 4 hours, with the use of the vibrators as may be required for less steep-walled reactor cones. The sludge separator S should hold the total solid content of the chamber C. For an 303 l chamber, a sludge container S of about 74 l is adequate.

Thus, a total batch time is 5 1/2 hours, based on: filling 25 min.; acidification/iron contact 30 min.; neutralization 20 min.; settling 4 hrs.; liquid and sludge discharge 15 min. In a 284 l assembly, 4 batches a day are possible=1135 l/day capacity.

After flocculation of the alkylation cycle, the supernatent liquid from the above Los Coyotes raw sewage had coliform MPN reduced to 70/100 ml. Another raw sewage sample which in addition was given oxidation treatment following flocculation had initial 4,900,000 coliform MPN/100 ml reduced to less than 2.2 MPN/100 ml; the processed sludge was also less than 2.2 MPN/100 ml.

It was also demonstrated that initial aeration/oxidation in the surge tank 10 is of great value in reducing biochemical oxygen demand (BOD). Raw sewage with initial BOD 158.3 mg/l was reduced to 128.0 mg/l with 20 hours aeration, and to 86.7 mg/l with 40 hr. aeration. With 20 hr. aeration plus flocculation plus 20 hr. post aeration it was reduced to 38.7 mg/l. These runs illustrate the cumulative effect of the successive steps. Thus, the above result (70/100 ml) which was obtained without initial aeration in tank 10 for purposes of illustration, woud have been still further reduced by the 5 1/2 hour cycle time spent in the surge tank 10; and would be further reduced by post cycle oxidation, if required.

**Claims**

1. A mixing and reaction chamber particularly suitable for effecting selective, stepwise,

treatment of a flowable contaminated body of liquid therein, said chamber having multiple inlet means with conduit coupling means for flow coupling respectively to acidic and alkaline reagent supply sources and for introduction of said body of liquid into the chamber, characterised in that the chamber (C) has a conical body portion (174) formed of downwardly tapering, internally smooth walls terminating in a lower apical region (127) having selective flow control and dual outlet means (130, 131, 128) for separately withdrawing from the contained body of liquid, a solid particle component and a supernatent liquid component separated therefrom, that the conical body portion (174) has mixing means (122, 123) operative within its contained body of liquid and additionally has means (125) for selective introduction of gaseous reagents including air into the body of liquid for reaction therewith, and that the conical body portion (174) has power driven vibration means (V1, V2) attached thereto and adapted for accentuating formation therein and accumulation of solid particles in said apical region (127) following introduction of said acidic or alkaline reagents.

2. A mixing and reaction chamber as claimed in claim 1, characterised in that the chamber (C) additionally includes spray outlet means (185,186) disposed about the inner periphery adjacent the upper edge of said conical body portion (174) and has coupling means (50) for flow connection to said acidic reagent supply source whereby, in the absence of said body of liquid, the chamber walls may be washed down with the acidic reagent.

3. A mixing and reaction chamber as claimed in claim 1 characterised in that the internally smooth walls of the conical body portion (174) comprise an acid-resistant surface formed by polymerized resin.

4. A mixing and reaction chamber as claimed in claim 3, characterised in that the internally smooth walls of the conical body portion (174) comprise acid-resistant, resin-impregnated, fibrous glass.

5. A mixing and reaction chamber as claimed in claim 1, characterised in that the conical body portion (174) comprises an outer support frame (173) and a preformed liner (180) supported by said frame.

6. A mixing and reaction chamber as claimed in claim 1, characterised in that the walls of the conical body portion (174) are inclined to the vertical axis of the cone at an angle no greater than about 27°.

7. A mixing and reaction chamber as claimed in claim 1, characterised in that the chamber (C) includes a sealable top closure (177) adapted thus to complete a gas containing chamber (179) overlying said body of liquid.

8. An assembly for processing contaminated liquid so as to produce sterile solid material and substantially uncontaminated liquid therefrom, said assemly including storage containers for acidic and alkaline reagent, an iron reaction chamber and process control means, characterized in that the assembly comprises, in flow-connected association, a mixing and reaction chamber (C) as claimed in any preceding claim disposed in functional supply connection with said separate storage containers of acidic reagent (36, 134, 136) and alkaline reagent (101, 109) said iron reaction chamber (113) containing a flow-through iron bed adapted to introduce ferrous/ferric ions into said body of liquid when acidified, the iron reaction chamber (113) being disposed to receive liquid flow m said outlet means (128, 130) and being flow connected (117) to deliver an outflow back to the mixing and reaction chamber (C) where alkaline reagent may be added thereto; and said process control means including pH sensor and remote operated pump and valve means for effecting stepwise operation including addition of an amount of said acidic reagent from its storage container to the contaminated liquid to produce pH of about 2 and for continuous circulation of said liquid jointly through the mixing and reaction chamber and through the iron reaction chamber in response to timer means forming part of said control means, said control means also including means for stopping said last circulation and thereafter adding alkaline reagent from its respective storage container to the acidified body of liquid in the mixing and reaction chamber so a to produce a pH of about 10.

9. An assembly as claimed in claim 8, characterised in that the acidic reagent storage containers comprise separate containers for sulfuric acid (36) and for sulfur dioxide gas (134, 136) which containers are flow connected respectively to supply said mixing and reaction chamber (C) and said iron reaction chamber (113).

10. An assembly as claimed in claim 8, characterised in that the assembly additionally includes filtration and oxidizing means (149, 150 for treating the liquid component of said body of liquid after separation of solid contaminants therefrom, said oxidizing means constituting a final treatment unit of said assembly.

11. An assembly as claimed in claim 8, characterised in that the assembly additionally includes comminuting means (20, 22) and aeration/oxidation means (14) for treating said body of liquid prior to introduction into said mixing and reaction chamber.

12. An assembly as claimed in claim 8, characterised in that the assembly additionally includes means (26, 29, 21, 23, 24) for moving the mixture of liquid and said solid particle component to said mixing and reaction chamber (C), including flow means (27) for returning separated liquid to the initial body of liquid for continued flow treatment therewith.

13. A mixing and reaction chamber according to claim 5, which includes at least one longitudinal anchorage strut disposed inwardly overlying said liner and said vibration means are carried by said outer support frame and attached to said strut through the liner.

## Revendications

1. Chambre de mélange et de réaction, adaptée en particulier à effectuer un traitement sélectif par paliers d'une masse de liquide contaminée s'écoulant à travers elle, ladite chambre comportant plusieurs moyens d'admission pourvus de moyens de raccordement de conduits pour la réalisation d'un accouplement générateur d'écoulement avec des sources d'alimentation en réactifs acide et alcalin respectivement et pour l'introduction de ladite masse de liquide dans la chambre, caractérisée en ce que la chambre (C) présente un corps conique (174) formé de parois intérieurement lisses qui s'inclinent vers le bas sous la forme d'un cône et se terminent par une région apicale inférieure (127) comportant des moyens de réglage sélectif de débit et d'évacuation double (130, 131, 128) pour extraire séparément de la masse de liquide emprisonnée, un composant de particules solides et un composant de liquide surnageant isolé du précédent, en ce que le corps conique (174) est équipé de moyens de réalisation d'un mélange (122, 123) aptes à être mis en action à l'intérieur de la mass de liquide qu'il contient et comporte en plus des moyens (125) pour introduire de façon sélective des réactifs gazeux, incluant l'air, dans la masse de liquide en vue d'une réaction avec celle-ci, et en ce que le corps conique (174) est équipé de moyens de mise en vibrations (V1, V2) mûs par une force motrice, fixés sur le corps et destinés à accentuer la formation à l'intérieur de celui-ci et l'accumulation de particules solides dans ladite région apicale (127), à la suite de l'introduction desdits réactifs acide et alcalin.

2. Chambre de mélange et de réaction telle que définie dans la revendication 1, caractérisée en ce que la chamber (C) comporte en plus des moyens formant orifices de pulvérisation (185, 186) disposés autour de la surface périphérique intérieure voisine du bord supérieur dudit corps conique (174) et est équipée de moyens de raccordement (50) pour réaliser une connexion génératrice d'écoulement avec ladite source d'alimentation en réactif acide, ce qui fait qu'en l'absence de ladite masse de liquide, les parois de la chamber peuvent être rincées par le réactif acide.

3. Chambre de mélange et de réaction telle que définie dans la revendication 1, caractérisée en ce que les parois intérieurement lisses du corps conique (174) présentent une surface résistante aux acides, formée par de la résine polymérisée.

4. Chambre de mélange et de réaction telle que définie dans la revendication 3, caractérisée en ce que les parois intérieurement lisses du corps conique (174) comprennent des fibres de verre résistantes aux acides et imprégnées de résine.

5. Chambre de mélange et de réaction telle que définie dans la revendication 1, caractérisée en ce que le corps conique (174) comprend une armature de support extérieure (173) et une chemise préformée (180) supportée par ladite armature.

6. Chambre de mélange et de réaction telle que définie dans la revendication 1, caractérisée en ce que les parois du corps conique (174) sont inclinées par rapport à l'axe vertical du cône d'un angle non-supérieur à environ 27°.

7. Chambre de mélange et de réaction telle que définie dans la revendication 1, caractérisée en ce que la chambre (C) comprend un organe de fermeture supérieur étanchable (177) permettant ainsi de définir, au-dessus de ladite masse de liquide, une chambre pour gaz (1979).

8. Installation pour le traitement d'un liquide contaminé permettant de produire, à partir de celui-ci, une matière solid stérile et un liquid sensiblement décontaminé, ladite installation comprenant des réservoirs de stockage pour des réactifs acides et alcalins, une chambre de réaction avec le fer et des moyens de commande du traitement, caractérisée en ce que l'installation comprend, selon un mode de connexion assurant un écoulement, une chambre de mélange et de réaction (C), telle que définie dans l'une quelconque des revendications précédentes, raccordée fonctionnellement auxdits réservoirs distincts de stockage de réactif acide (36, 134, 136) et de réactif alcalin (101, 109) de façon à pouvoir être alimentée par ceux-ci, ladite chambre de réaction avec le fer (113) renfermant un lit de fer apte à être traversé par l'écoulement et à introduire des ions ferreux/ferriques dans ladite masse de liquide quand celle-ci est acidifiée, la chambre de réaction avec le fer (113) étant disposée de façon à recevoir l'écoulement de liquide provenant desdits moyens d'évacuation (128, 130) et raccordée (117) de manière à refouler l'effluent dans la chambre de mélange et de réaction (C) où le réactif alcalin peut lui être ajouté; et lesdits moyens de commande du traitement comprenant un détecteur de pH et une pompe actionnée à distance ainsi que des moyens formant valves pour assurer un processus par paliers incluant l'adjonction d'une certaine quantité dudit réactif acide, issu de son réservoir de stockage, au liquide contaminé pour établir un pH d'environ 2 et pour assurer une circulation continue dudit liquide à la fois à travers la chambre de mélange et de réaction et à travers la chambre de réaction avec le fer, en réponse à des moyens de synchronisation qui font partie desdits moyens de commande, lesdits moyens de commande comprenant également un moyen pour interrompre ladite dernière circulation et ajouter ensuite du réactif alcalin, provenant de son réservoir de stockage respectif, à la masse de liquid acidifiée dans la chambre de mélange et de réaction afin d'établir un pH d'environ 10.

9. Installation telle que définie dans la revendication 8, caractérisée en ce que les réservoirs de stockage de réactif acide comprennent des réservoirs distincts pour de l'acide sulfurique (36) et pour du dioxyde de soufre gazeux (134, 136), ces réservoirs étant raccordés respectivement à ladite chambre de mélange et de réaction (C) et à ladite chambre de réaction avec le fer (113), pour les alimenter.

10. Installation telle que définie dans la revendication 8, caractérisée en ce que l'installation comprend en plus des moyens de filtration et d'oxydation (149, 150) pour traiter le composant liquid de ladite masse de liquide après séparation de celle-ci des substances solides contaminantes, lesdits moyens d'oxydation constituant une unité de traitement finale de ladite installation.

11. Installation telle que définie dans la revendication 8, caractérisée en ce que l'installation comprend en plus des moyens de pulvérisation (20, 22) ainsi que des moyens d'aération/oxydation (14) pour traiter ladite masse le liquid avant son introduction dans ladite chambre de mélange et de réaction.

12. Installation telle que définie dans la revendication 8, caractérisée en ce que l'installation comprend en plus des moyens (26, 29, 21, 23, 24) pour acheminer le mélange constitué du liquide et dudit composant de particules solides dans ladite chambre de mélange et de réaction (C), ces moyens incluant un moyen de mise en écoulement (27) pour ramener le liquide après séparation vers la masse de liquide initiale pour qu'il subisse avec celle-ci un traitement continu par écoulement. ment.

13. Chambre de mélange et de réaction selon la revendication 5, qui comprend au moins un montant longitudinal d'ancrage disposé à l'intérieur de ladite chemise en reposant sur celle-ci et lesdits moyens de mise en vibrations sont portés par ladite armature de support extérieure et fixés audit montant à travers la chemise.

**Patentansprüche**

1. Misch- und Reaktionskammer, insbeseondere für die Durchführug einer wahlweisen, schrittweisen Behandlung einer fließfähigen, verschmutzten Flüssigkeitsmenge, wobei die Kammer mehrere Einlaßmittel mit Kupplungsmitteln zur jeweiligen Strömungskopplung mit Vorratsquellen für saure und alkalische Reagenzien und für das Einbringen der Flüssigkeitsmenge in die Kammer aufweist, dadurch gekennzeichnet, daß die Kammer (C) einen sich nach unten verjüngenden konischen Körperbereich (174), inner glatte Wände, die in einem unteren Spitzenbereich (127) mit wahlweisen Strömungssteuer- und Doppel-Auslaßmitteln (130, 131, 128) zum getrennten Abziehen eines Festteilchenbestandteils und eines von diesem abgetrennten, überstehenden Flüssigkeitsbestandteils aus der Flüssigkeitsmenge enden aufweist, daß der konische Körperbereich (174) Mischmittel (122, 123), die auf die enthaltene Flüssigkeitsmenge arbeiten, und zusätzlich Mittel (125) zur wahlweisen Zufuhr von gasförmigen Reagenzien einschließlich Luft in die Flüssigkeitsmenge zur Reaktion mit dieser aufweist, und daß der konische Körperbereich (174) an ihm angebrachte, motorgetriebene Schwingungsmittel (V1, V2) hat, die zur Verstärkung des Ausfällens und zur Ansammlung von Feststoffteilchen im Spitzenbereich (127) nach Zufuhr von sauren oder alkalischen Reagenzien dienen.

2. Misch- und Reaktionskammer nach Anspruch 1, dadurch gekennzeichnet, daß die Kammer (C) zusätzlich Sprühauslaßmittel (185, 186), die um den inneren Umfang benachbart der oberen Kante des konischen Körperbereichs (174) angeordnet sind, und Kupplungsmittel (50) für eine Strömungsverbindung zur Vorratsquelle für saures Reagenz aufweist, so daß bei Fehlen von Flüssigkeitsmenge die Kammerwände mit dem sauren Reagenz abgewaschen werden.

3. Misch- und Reaktionskammer nach Anspruch 1, dadurch gekennzeichnet, daß die innen glatten Wände des konischen Körperbereichs (174) eine säurebeständige Oberfläche aus polimerisiertem Harz aufweisen.

4. Misch- und Reaktionskammer nach Anspruch 3, dadurch gekennzeichnet, daß die inner glatten Wände des konischen Körperbereichs (174) aus säurebeständigem, harzimprägniertem, faserverstärktem Glas bestehen.

5. Misch- und Reaktionskammer nach Anspruch 1, dadurch gekennzeichnet, daß der konische Körperbereich (174) einen äußeren Halterahmen (173) und eine von dem Rahmen getragene, vorgeformte Beschichtung (180) aufweist.

6. Misch- und Reaktionskammer nach Anspruch 1, dadurch gekennzeichnet, daß die Wände des konischen Körperbereichs (174) zur senkrechten Achse des Kegels unter einem Winkel von nicht mehr als etwa 27° geneigt sind.

7. Misch- und Reaktionskammer nach Anspruch 1, dadurch gekennzeichnet, daß die Kammer (C) einen abdichtbaren Deckel (177) zur Bildung einer die Flüssigkeitsmenge überdeckenden, Gas enthaltenden Kammer (179) aufweist.

8. Anordnung zur Behandlung verschmutzter Flüssigkeit, um aus dieser steriles Feststoffmaterial und im wesentlichen unverschmutzte Flüssigkeit zu erzeugen, wobei die Anordnung einen Vorratsbehälter für saures und alkalisches Reagenz, eine Eisen-Reaktionskammer und Prozeßsteuermittel enthält, dadurch gekennzeichnet, daß die Anordnung in Strömungsverbindung eine Misch- und Reaktionskammer (C) gemäß einem der vorherigen Ansprüche in funktioneller Förderverbindung mit den getrennten Vorratsbehältern für saures Reagenz (36, 134, 136) und alkalisches Reagenz (101, 109) enthält, wobei die Eisen-Reaktionskammer (113) ein Durchfluß-Eisenbett zum Einbringen von Eisen-II/Eisen-III-Ionen in die Flüssigkeitsmenge, wenn diese angesäuert ist, enthält, wobei die Eisen-Reaktionskammer (113) so angeordnet ist, daß sie den Flüssigkeitsstrom von den Auslaßmitteln (128, 130) empfängt und in Strömungsverbindung (117) steht, um einen Ausfluß zurück zur Misch- und Reaktionskammer (C) zu liefern, wo das alkalische Reagenz zugesetzt werden kann; und daß die Prozeßsteuermittel einen pH-Sensor und fernbetätigte Pump- und Ventilmittel zur Bewirkung eines schrittweisen Betriebes einschließlich des Zusetzen eine Menge von saurem Reagenz aus seinem Vorratsbehälter zu der verschmutzten Flüssigkeit, um einen pH-Wert von etwa 2 zu erzeugen, und zur kontinuierlichen Zirkulation der Flüssigkeit gemeinsam durch die Misch- und Reaktionskammer und durch die Eisen-Reaktionskammer in Abhängigkeit von einen Teil der Steuermittel bildenden Zeitgebermittel aufweist, wobei die Steuermittel auch Mittel zur Unterbrechung der letzten Zirkulation und nachfolgendem Zusetzen von alkalischem Reagenz aus dem jeweiligen Vorratsbehälter zu der angesäuerten Flüssigkeitsmenge in der Misch- und Reaktionskammer aufweisen, um einen pH-Wert von etwa 10 zu erzeugen.

9. Anordnung nach Anspruch 8, dadurch gekennzeichnet, daß die Vorratsbehälter für saures Reagenz getrennte Behälter für Schwefelsäure (36) und für Schwefeldioxid-Gas (134, 136) enthalten, die jeweils in Strömungsverbindung mit der Misch- und Reaktionskammer (C) und der Eisen-Reaktionskammer (113) stehen.

10. Anordnung nach Anspruch 8, dadurch gekennzeichnet, daß die Anordnung zusätzlich Filtrier- und Oxydiermittel (149, 150) zur Behandlung des flüssigen Bestandteils der Flüssigkeitsmenge nach Abtrennung der festen Verunreigungen von dieser enthält, wobei die Oxydiermittel eine abschließende Behandlungseinheit der Anordnung bilden.

11. Anordnung nach Anspruch 8, dadurch gekennzeichnet, daß die Anordnung zusätzlich Zerkleinerungsmittel (20, 22) und Belüftungs/Oxydationsmittel (14) sur Behandlung der Flüssigkeitsmenge vor dem Einbringen in die Misch- und Reaktionskammer enthält.

12. Anordnung nach Anspruch 8, dadurch gekennzeichnet, daß die Anordnung zusätzlich Mittel (26, 29, 21, 23, 24) zur Bewegung der Mischung aus Flüssigkeit und Feststoffteilchenbestandteil zur Mischund Reaktionskammer (C) einschließlich Strömungsmittel (27) zur Rückführung der abgetrennten Flüssigkeit zu der anfänglichen Flüssigkeitsmenge zur kontinuierlichen Strömungsbehandlung mit dieser enthält.

13. Misch- und Reaktionskammer nach Anspruch 5, die mindestens eine längliche Verankerungsstrebe, die die Beschichtung innen überdeckend angeordnet ist, enthält und bei der die Schwingungsmittel vom äußeren Halterahmen getragen und durch die Beschichtung an der Strebe befestigt sind.

FIG.1.

PRESLURY LIME 109

REACTOR CONE

PRODUCT WATER RESERVOIR

Cl or OZONE

IRON REBAR TANK

FILTER

INFLUENT SURGE TANK

VARIABLE ANGLE DRYING TABLE

SLUDGE PRESS

1

FIG.4.

FIG.5.

FIG.6.

FIG.2.

FIG.3.

2